# EUROPÄISCHE PATENTSCHRIFT

(11) **EP 1 223 061 B1**
(45) Veröffentlichungstag und Bekanntmachung des Hinweises auf die Patenterteilung: **15.02.2006**
(21) Anmeldenummer: 01129300.8
(22) Anmeldetag: 13.12.2001
(51) Int. Cl.: B60H 1/34

(54) **Luft-Ausströmer, insbesondere zur Fahrzeugklimatisierung**
Air diffuser particularly for air conditioning a vehicle
Diffuseur d'air en particulier pour climatiser un véhicule

(30) Priorität: 16.01.2001 DE 20100740 U
(43) Veröffentlichungstag der Anmeldung: 17.07.2002
(73) Patentinhaber: TRW Automotive Electronics & Components GmbH & Co. KG, 67677 Enkenbach/Alsenborn (DE)
(72) Erfinder: Demerath, Michael, 66909 Hüffler (DE)
(74) Vertreter: Sties, Jochen

(56) Entgegenhaltungen:
- US-A- 5 036 753
- US-A- 5 080 002
- US-A- 5 690 550

## Beschreibung

Die Erfindung betrifft einen Luft-Ausströmer, insbesondere zur Fahrzeugklimatisierung, mit einem Rahmen, mehreren Lamellen, die um eine erste Achse verschwenkbar angeordnet sind, und mindestens einem Koppelelement, mit dem jede der Lamellen gekoppelt ist, wobei das Koppelelement relativ zur ersten Achse zwischen einer Neutralstellung, in der die Lamellen zueinander parallel sind, und einer Komfortstellung verstellbar ist, in der mindestens ein Teil der Lamellen in zueinander entgegengesetzten Richtungen verschwenkt ist.

Mit den Lamellen, die entweder horizontal oder vertikal angeordnet sein können, kann die Richtung des aus dem Ausströmer austretenden Luftstroms eingestellt werden. Der Luftstrom wird üblicherweise so gerichtet, daß er nicht direkt auf einen Fahrzeuginsassen auftrifft, da dies als unangenehm empfunden wird. Jedoch läßt sich bei hohem Luftdurchsatz und den entsprechend hohen Geschwindigkeiten, mit denen der Luftstrom den Luft-Ausströmer verläßt, mit den bekannten Ausströmern nicht zuverlässig verhindern, daß der Fahrzeuginsasse einem als unangenehm empfundenen Luftstrom ausgesetzt wird.

Die US 5 690 550 offenbart einen Luft-Ausströmer der eingangs genannten Art mit einem Rahmen und mehreren Lamellen, die mit einem beweglichen Koppelelement verbunden sind. Mittels des Koppelelements lassen sich die Lamellen von einer Parallelstellung in eine Diffusionsstellung bringen, in der allerdings keine Verschwenkung der Lamellen unter Beibehaltung deren relativer Stellung zueinander möglich ist.

Die Aufgabe der Erfindung besteht somit darin, einen Luft-Ausströmer zu schaffen, mit dem auch bei einem hohem Luftdurchsatz verhindert werden kann, daß der Fahrzeuginsasse einem als unangenehm empfundenen Luftstrom ausgesetzt wird.

Zu diesem Zweck ist erfindungsgemäß bei einem Luft-Ausströmer der eingangs genannten Art ein zweites Koppelelement vorgesehen, das verschiebbar am Rahmen gelagert ist und an dem die Lamellen um die erste Achse schwenkbar gelagert sind. Auf diese Weise kann, wenn die zueinander entgegengesetzt verschwenkten Lamellen aufgefächert sind, ein divergierender Luftstrom erzeugt werden, in welchem geringere Strömungsgeschwindigkeiten herrschen als bei einem Luftstrom mit konstantem Querschnitt. Zudem können die Lamellen sowohl in der Neutralstellung parallel zueinander wie auch in der Komfortstellung unter Erhaltung der aufgefächerten Ausrichtung verschwenkt werden, um die Richtung eines aus dem Luft-Ausströmer austretenden Luftstroms einzustellen. Somit kann auch bei einem hohen Luftdurchsatz verhindert werden, daß der austretende Luftstrom mit hohen Geschwindigkeiten auf den Fahrzeuginsassen auftrifft.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen Schnittansicht einen Luft-Ausströmer gemäß einer ersten Ausführungsform der Erfindung mit dem Koppelelement in der Neutralstellung;
- Figur 2 den Luft-Ausströmer von Figur 1 mit dem Koppelelement in der Komfortstellung;
- Figur 3 in einer schematischen Schnittansicht einen Luft-Ausströmer gemäß einer zweiten Ausführungsform der Erfindung mit dem Koppelelement in der Neutralstellung;
- Figur 4 den Luft-Ausströmer von Figur 3 mit dem Koppelelement in der Komfortstellung;
- Figur 5 in einer schematischen Schnittansicht einen Luft-Ausströmer gemäß einer dritten Ausführungsform der Erfindung mit dem Koppelelement in der Neutralstellung; und
- Figur 6 den Luft-Ausströmer von Figur 5 mit dem Koppelelement in der Komfortstellung.

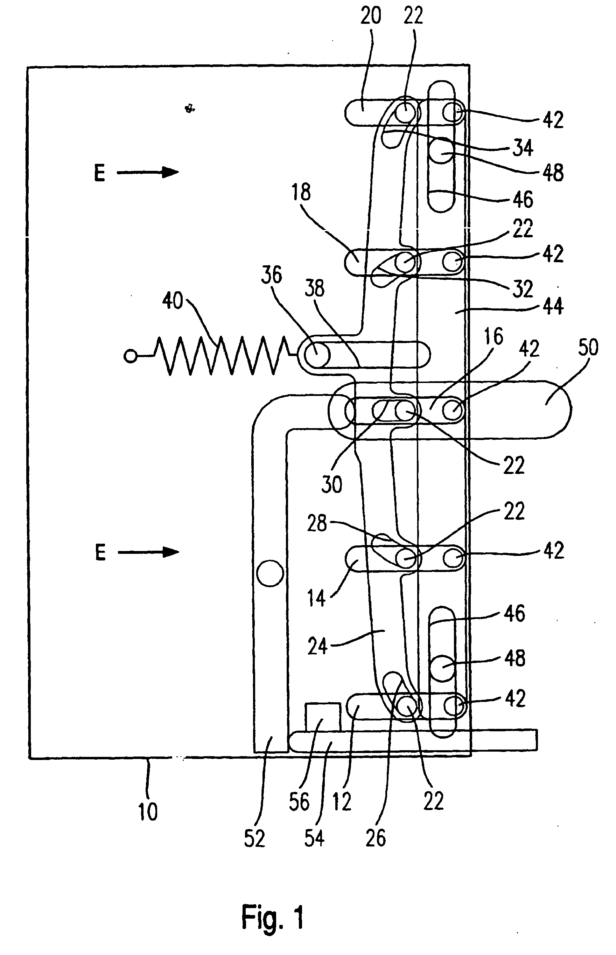

In Figur 1 ist ein Luft-Ausströmer gemäß einer ersten Ausführungsform zu sehen, der einen Rahmen 10 aufweist, in welchem beim dargestellten Ausführungsbeispiel fünf Lamellen 12, 14, 16, 18, 20 schwenkbar angebracht sind. Jede der Lamellen ist schwenkbar an einem ersten Koppelelement 24 mittels eines Zapfens 22 gelagert, der etwa mittig zwischen dem vor-derem, der Außenseite des Ausströmers zugewandten Rand und dem hinterem, dem Innenraum des Ausströmers zugewandten Rand der Lamelle angeordnet ist. Das erste Koppelelement 24 ist zu diesem Zweck mit mehreren Kulissen 26, 28, 30, 32, 34 versehen, die den Zapfen 22 zugeordnet sind.

Das erste Koppelelement ist mit einem Führungszapfen 36 versehen, der in einer Schiebeführung 38 am Rahmen aufgenommen ist. Mit dem ersten Koppelelement 24 ist eine Rückstellfeder 40 verbunden, die mit ihrem anderen Ende am Rahmen 10 angebracht ist. Die Rückstellfeder 40 zieht das erste Koppelelement 24 bezüglich Figur 1 nach links in eine sogenannte Neutralstellung, in der die Zapfen 22 am rechten Rand der entsprechenden Kulisse liegen.

Die Lamellen 12, 14, 16, 18, 20 sind an ihrem vorderen, also bezüglich Figur 1 rechten Rand mit einem Zapfen 42 versehen, der drehbar in einem zweiten Koppelelement 44 aufgenommen ist. Das zweite Koppelelement 44 ist mittels zwei Schiebeführungen 46 translatorisch verschiebbar auf zwei fahrzeugfest angebrachten Führungszapfen 48 angebracht.

Wenn sich das erste Koppelelement 24 in der in Figur 1 gezeigten Neutralstellung befindet, können die Lamellen 12, 14, 16, 18, 20 parallel zueinander verschwenkt werden, um die Richtung eines aus dem Luft-Ausströmer austretenden Luftstroms einzustellen. Zur Verstellung der Lamellen ist hier ein Greifvorsprung 50 vorgesehen, der auf die Lamelle 16 aufgesetzt ist.

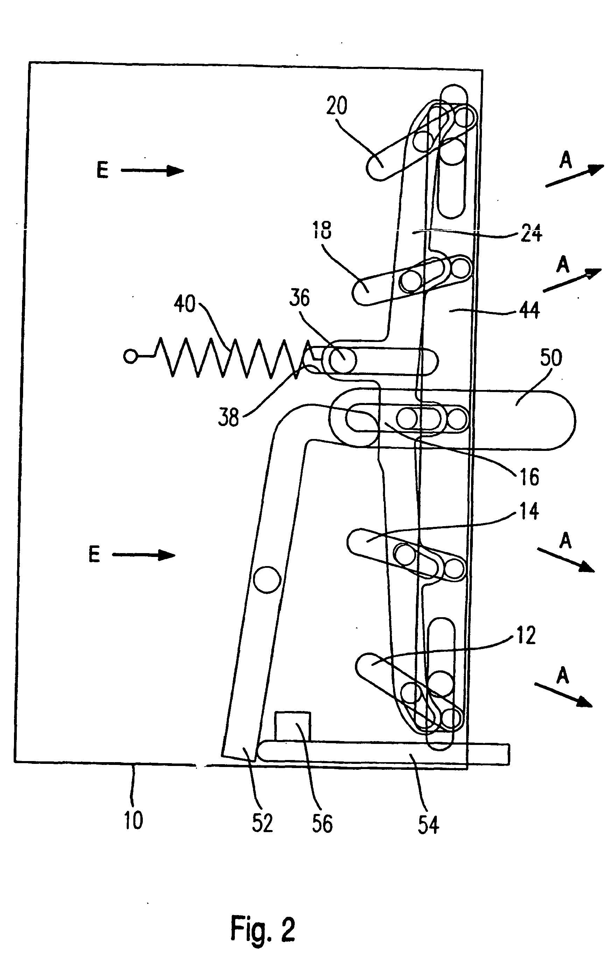

Am Rahmen 10 ist ein Betätigungselement 52 gelagert, das hier als zweiarmiger Hebel ausgebildet ist. Das Betätigungselement 52 liegt mit einem Ende am ersten Koppelelement 24 und mit dem anderen Ende an einem Taster 54 an, der von außerhalb des Luft-Ausströmers aus zugänglich ist. Mit dem Taster 54 wirkt ein hier schematisch dargestellter Rastmechanismus 56 zusammen. Durch Eindrücken des Tasters 54 in den Luft-Einströmer wird über das Betätigungselement 52 das erste Koppelelement 24 translatorisch zum zweiten Koppelelement 44 hin verschoben, also bezüglich Figur 1 nach rechts in die in Figur 2 gezeigte, sogenannte Komfortstellung. In dieser Stellung wird das erste Koppelelement 24 mittels des Rastmechanismus 56 gehalten, bis das Betätigungselement 52 durch eine erneute Betätigung des Tasters 54 freigegeben wird.

Wie in Figur 2 zu sehen ist, befinden sich aufgrund der Verschiebung des ersten Koppelelementes 24 die Zapfen 22 der Lamellen nunmehr am linken Rand der Kulissen 26, 28, 30, 32, 34. Die Kulisse 30, die der mittig angeordneten Lamelle 16 zugeordnet ist, der sogenannten Neutrallamelle, erstreckt sich geradlinig und parallel zu der von der Schiebeführung 38 vorgegebenen Verstellrichtung des ersten Koppelelementes 24. Aus diesem Grund ändert sich die Ausrichtung der Neutrallamelle bei der Verstellung des ersten Koppelelementes nicht. Die den beiden außenliegenden Lamellen 12, 20 zugeordneten Kulissen 26, 34 verlaufen gekrümmt und stark geneigt zu der von der Schiebeführung 38 vorgegebenen Verstellrichtung des ersten Koppelelementes 24. Aus diesem Grund werden die Außenlamellen 12, 20 bei der Verstellung des ersten Koppelelementes über den Zapfen 22 in zueinander entgegengesetzten Richtungen so verschwenkt, daß ihre Zapfen 22 näher zur Neutrallamelle wandern. Die Kulissen 28, 32, die den zwischen der Neutrallamelle und den Außenlamellen liegenden Zwischenlamellen 14, 18 zugeordnet sind, sind ebenfalls gekrümmt ausgeführt, laufen jedoch weniger stark geneigt relativ zu der von der Schiebeführung 38 vorgegebenen Verschieberichtung des ersten Koppelelementes 24. Aus diesem Grunde werden auch die Zwischenlamellen 14, 18 bei der Verstellung des ersten Koppelelementes verschwenkt, jedoch weniger stark als die Außenlamellen 12, 20. Aufgrund der nun aufgefächerten Ausrichtung der Lamellen 12, 14, 16, 18, 20 verläßt der in der Richtung der Pfeile E in den Luft-Ausströmer eintretende Luftstrom diesen als divergierender Luftstrom, wie er durch die Pfeile A angedeutet ist.

Wenn der Taster 54 erneut betätigt wird, gibt der Rastmechanismus 56 diesen frei. Dadurch kann das erste Koppelelement 24 unter der Wirkung der Rückstellfeder 40 in seine Neutralstellung zurückkehren, in der sich die Lamellen 12, 14, 16, 18, 20 wieder parallel zueinander erstrecken.

Auch in der in Figur 2 gezeigten Komfortstellung mit aufgefächerten Lamellen ist es möglich, diese durch Betätigung des Greifvorsprungs 50 zu verstellen. Dabei bleibt die aufgefächerte Ausrichtung der Lamellen weitgehend erhalten.

Gemäß einer in den Zeichnungen nicht dargestellten, alternativen Ausführungsform kann die Rückstellfeder 40, die zwischen dem Rahmen und dem ersten Koppelelement wirkt, ersetzt werden durch eine oder mehrere Rückstellfedern, die zwischen dem ersten und dem zweiten Koppelelement wirken. Auf diese Weise können Rückstellkräfte bei schräggestellten Lamellen vermieden werden.

Gemäß einer in den Zeichnungen nicht dargestellten, weiteren Alternative kann durch eine entsprechende Anordnung der Kulissen 26, 28, 30, 32, 34 auch erreicht werden, daß die Lamellen 12, 14, 16, 18, 20 bei der Verstellung des ersten Koppelelementes nicht aufge-fächert, sondern zusammengefächert werden. Dies führt zu einem konver-gierenden Luftstrahl.

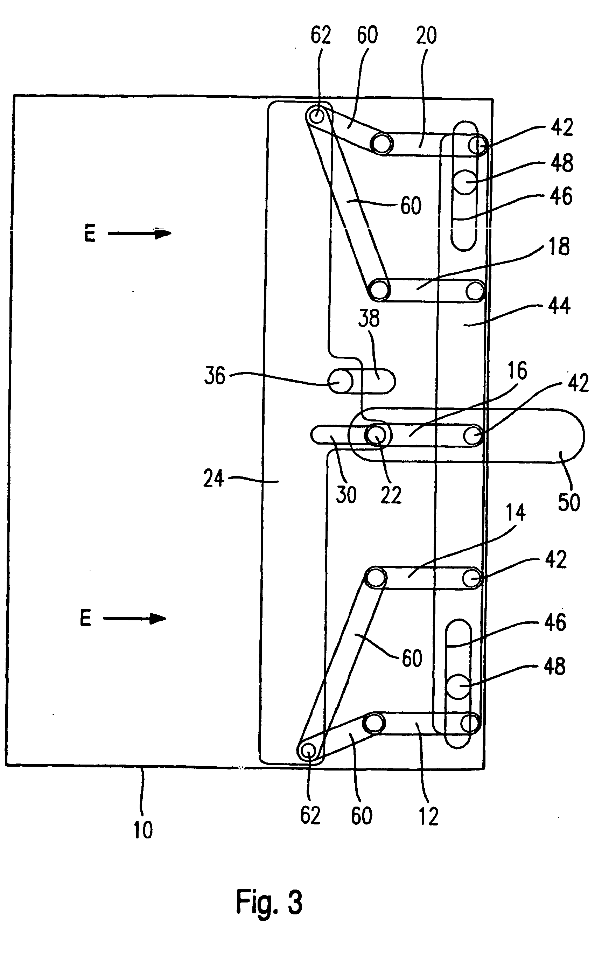

In Figur 3 ist ein Luft-Ausströmer gemäß einer zweiten Ausführungsform gezeigt. Für die von der ersten Ausführungsform bekannten Bauteile werden dieselben Bezugszeichen verwendet, und es wird auf die obigen Erläuterungen verwiesen. Im Hinblick auf eine übersichtliche Darstellung wurden das Betätigungselement, der Taster und der Rastmechanismus, die zur Verstellung des ersten Koppelelements dienen, sowie die Rückstellfeder für das ersten Koppelelement nicht dargestellt.

Im Unterschied zur ersten Ausführungsform werden bei der zweiten Ausführungsform keine Kulissenführungen für die Kopplung der Lamellen mit dem ersten Koppelelement verwendet, sondern jeweils eine Koppelstange 60 für jede der Außen- und Zwischenlamellen. Jeder dieser Koppelstangen ist an der ihr zugeordneten Lamelle durch den Zapfen 22 befestigt. Das andere Ende der Koppelstangen ist am ersten Koppelelement durch einen weiteren Zapfen 62 schwenkbar befestigt. Dabei sind die Koppelstangen 60 einer Außenlamelle 12 bzw. 20 und der daneben angeordneten Zwischenlamelle 14 bzw 18 auf einem einzigen Zapfen 62 gemeinsam gelagert; dieser Zapfen 62 liegt, von der Neutrallamelle aus betrachtet, weiter außen als die jeweilige Außenlamelle.

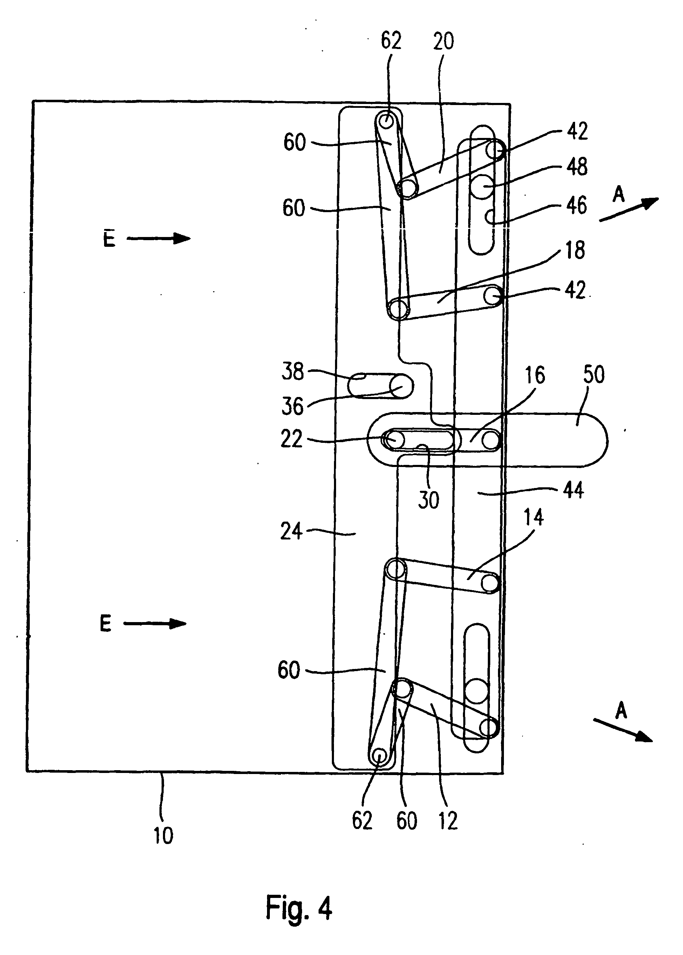

Durch die Lagerung der beiden Koppelstangen für eine Außen- und eine Zwischenlamelle auf einem Zapfen ergibt sich ein einfacher Aufbau. Mit diesem Aufbau läßt sich ohne weiteres die für die Verstellung der Lamellen erforderliche Geometrie erzielen, so daß dann, wenn das erste Koppelelement 24 in die in Figur 4 gezeigte Komfortstellung gebracht wird, die Außenlamellen 12, 20 stärker verschwenkt werden als die Zwischenlamellen 14, 18 und sich die aufgefächerte Ausrichtung der Lamellen einstellt.

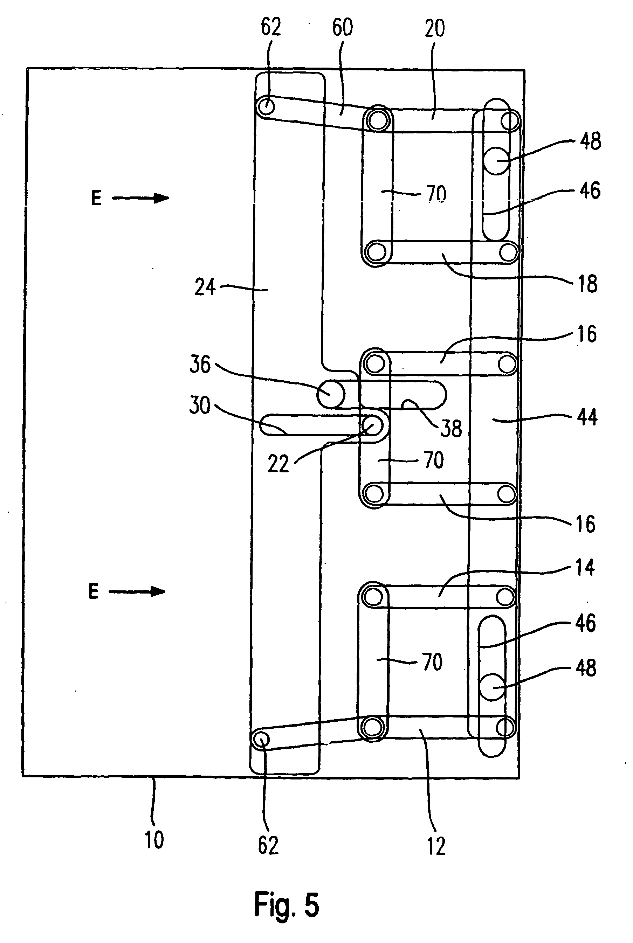

In Figur 5 ist ein Luft-Ausströmer gemäß einer dritten Ausführungsform gezeigt. Für die von der ersten und zweiten Ausführungsform bekannten Bauteile werden dieselben Bezugszeichen verwendet, und es wird auf die obigen Erläuterungen verwiesen. Im Hinblick auf eine übersichtliche Darstellung wurden das Betätigungselement, der Taster und der Rastmechanismus, die zur Verstellung des ersten Koppelelements dienen, sowie die Rückstellfeder für das ersten Koppelelement nicht dargestellt.

Der Luft-Ausströmer gemäß der dritten Ausführungsform entspricht von seinem Prinzip demjenigen der zweiten Ausführungsform; der wesentlichste Unterschied liegt darin, daß jede Außenlamelle 12; 20 mit der danebenliegenden Zwischenlamelle 12; 18 durch ein Verbindungsglied 70 verbunden ist, so daß sie sich parallel miteinander verstellen. Weiterhin sind nunmehr zwei Neutrallamellen 16 vorgesehen, die ebenfalls durch ein Verbindungsglied 70 miteinander verbunden sind.

Jedes Verbindungsglied 70 der Außen- und Zwischenlamellen ist mit dem ersten Koppelelement 24 durch eine Koppelstange 60 verbunden, die an dem ersten Koppelelement durch den Zapfen 62 gelagert ist. Das Verbindungsglied der beiden Neutrallamellen ist an dem ersten Koppelelement durch den Zapfen 22 gelagert, der in die Kulisse 30 im ersten Koppelelement eingreift.

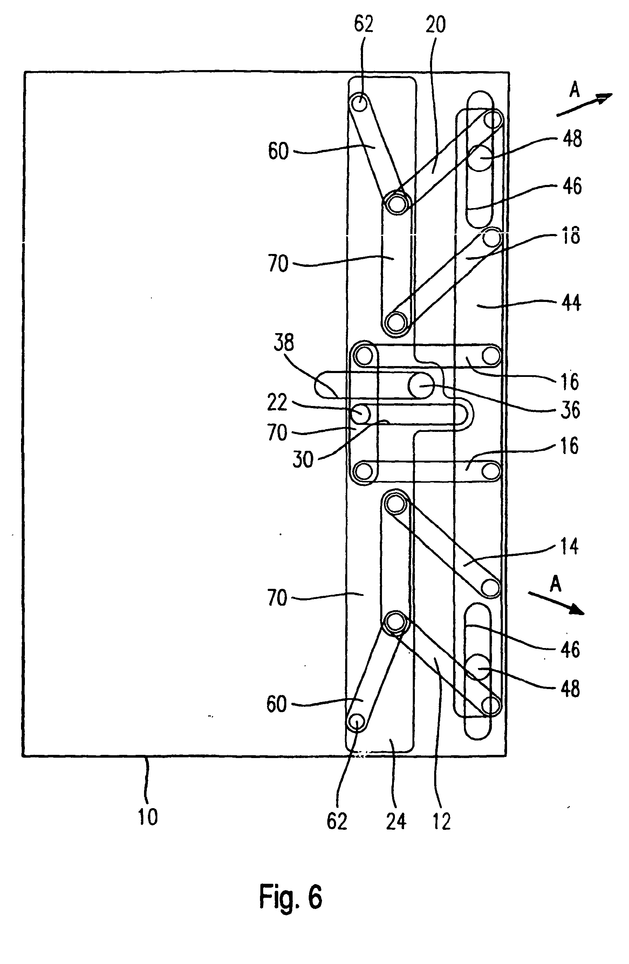

Wenn das erste Koppelelement 24 aus der in Figur 5 gezeigten Neutralstellung in die in Figur 6 gezeigte Komfortstellung gebracht wird, verbleiben die beiden Neutrallamellen 16 in ihrer Stellung, da die Kulisse 30 geradlinig und parallel zur von der Kulisse 38 vorgegebenen Verstellrichtung des ersten Koppelelements 24 verläuft. Dagegen werden die Außenlamellen und die Zwischenlamellen in zueinander entgegengesetzten Richtungen verschwenkt, da die Verbindungsglieder 70 von den Koppelstangen 60 aufeinander zu verstellt werden. Insgesamt ergibt sich ein aufgefächerter Luftstrom

## Patentansprüche

1. Luft-Ausströmer, insbesondere zur Fahrzeugklimatisierung, mit einem Rahmen (10), mehreren Lamellen (12, 14, 16, 18, 20), die um eine erste Achse (42) verschwenkbar angeordnet sind, mindestens einem Koppelelement (24), mit dem jede der Lamellen gekoppelt ist, wobei das Koppelelement relativ zur ersten Achse zwischen einer Neutralstellung, in der die Lamellen zueinander parallel sind, und einer Komfortstellung verstellbar ist, in der mindestens ein Teil der Lamellen in zueinander entgegengesetzten Richtungen verschwenkt ist, **gekennzeichnet durch** ein zweites Koppelelement (44), das verschiebbar am Rahmen (10) gelagert ist und an dem die Lamellen um die erste Achse (42) schwenkbar gelagert sind.

2. Luft-Ausströmer nach Anspruch 1, dadurch gekennzc ichnet, daß das erste Koppelelement (24) mit den Lamellen durch eine Kulissenführung (22, 26, 28, 30, 32, 34) schwenkbar gekoppelt ist.

3. Luft-Ausströmer nach Anspruch 2, **dadurch gekennzeichnet, daß** die Kulissenführung aus einer Kulisse (26, 28, 30, 32, 34) im Koppelelement und einem in die Kulisse eingreifenden Zapfen (22) an der entsprechenden Lamelle besteht.

4. Luft-Ausströmer nach Anspruch 3, **dadurch gekennzeichnet, daß** eine Neutrallamelle (16) vorgesehen ist, wobei die der Neutrallamelle zugeordnete Kulisse (30) sich geradlinig erstreckt, und daß beiderseits der Neutrallamelle jeweils eine Zwischenlamelle (14, 18) und eine Außenlamelle (12, 20) vorgesehen sind, wobei die der Außenlamelle zugeordnete Kulisse (26, 34) stärker relativ zur Neutrallamelle geneigt ist als die der Zwischenlamelle zugeordnete Kulisse (28, 32).

5. Luft-Ausströmer nach Anspruch 1, **dadurch gekennzeichnet, daß** das Koppelelement (24) mit einem Teil der Lamellen durch jeweils eine Koppelstange (60) verbunden ist.

6. Luft-Ausströmer nach Anspruch 5, **dadurch gekennzeichnet, daß** mindestens eine Neutrallamelle (16) vorgesehen ist, die mit dem Koppelelement durch eine geradlinige Kulissenführung (22, 30) verbunden ist, und daß beiderseits der Neutrallamelle jeweils eine Zwischenlamelle (14, 18) und eine Außenlamelle (12, 20) vorgesehen sind, die mit dem Koppelelement durch mindestens eine Koppelstange (60) verbunden sind.

7. Luft-Ausströmer nach Anspruch 6, **dadurch gekennzeichnet, daß** jede Außenlamelle und jede Zwischenlamelle durch jeweils eine Koppelstange (60) mit dem Koppelelement (24) verbunden sind und daß die beiden Koppelstangen (60) einer Außenlamelle (12; 20) und der danebenliegenden Zwischenlamelle (14; 18) auf einem gemeinsamen Zapfen (62) am Koppelelement gelagert sind.

8. Luft-Ausströmer nach Anspruch 7, **dadurch gekennzeichnet, daß** der Zapfen (62), auf dem die Koppelstangen gelagert sind, von der Neutrallamelle aus gesehen weiter außen liegt als die jeweilige Außenlamelle (12; 20), und daß die der Außenlamelle (12; 20) zugeordnete Koppelstange mit der von der geradlinigen Kulissenführung (22, 30) definierten Richtung einen kleineren Winkel einschließt als mit der der danebenliegenden Zwischenlamelle (14; 18) zugeordneten Koppelstange.

9. Luft-Ausströmer nach Anspruch 6, **dadurch gekennzeichnet, daß** jeweils eine Außenlamelle (12; 20) und die danebenliegende Zwischenlamelle (14; 18) durch ein Verbindungsglied (70) miteinander verbunden sind und daß die Koppelstange (60) an dem Verbindungsglied (70) angreift.

10. Luft-Ausströmer nach einem der Ansprüche 6 und 9, **dadurch gekennzeichnet, daß** zwei Neutrallamellen (16) vorgesehen sind, die durch ein Verbindungsglied (70) miteinander verbunden sind, und daß das Verbindungsglied (70) mittels der Kulissenfühmng (22, 30) mit dem Koppelelement (24) verbunden ist.

11. Luft-Ausströmer nach einem der vorhergehenden Ansprüche, **dadurch gekennzeichnet, daß** die Lamellen (12, 14, 16, 18, 20) in der Komfortstellung aufgefächert sind, so daß sich ein divergierender Luftstrom ergibt.

12. Luft-Ausströmer nach einem der Ansprüche 1 bis 10, **dadurch gekennzeichnet, daß** die Lamellen (12, 14, 16, 18, 20) in der Komfortstellung zusammengefachert sind, so daß sich ein konvergierender Luftstrom ergibt.

13. Luft-Ausströmer nach einem der vorhergehenden Ansnntche, **dadurch gekennzeichnet, daß** das Koppelelement (24) translatorisch verstellbar ist.

14. Luft-Ausströmer nach einem der vorhergehenden Ansprüche, **dadurch gekennzeichnet, daß** mindestens eine Rückstellfeder (40) vorgesehen ist, die das Koppelelement in die Neutralstellung beaufschlagt.

15. Luft-Ausströmer nach Anspruch 14, **dadurch gekennzeichnet, daß** die Rückstellfeder (40) zwischen dem Koppelelement und dem Rahmen wirkt.

16. Luft-Ausströmer nach Anspruch 14, **dadurch gekennzeichnet, daß** die Rückstellfeder zwischen dem Koppelelement und einer der Lamellen wirkt.

17. Luft-Ausströmer nach einem der vorhergehenden Ansprüche, **dadurch gekennzeichnet, daß** am Rahmen ein Betätigungselement (52) vorgesehen ist, das mit dem Koppelelement (24) zusammenwirkt.

18. Luft-Ausströmer nach Anspruch 17, **dadurch gekennzeichnet, daß** das Betätigungselement (52) mit einem Taster (54) versehen ist, der von der Außenseite des Luft-Ausströmers aus zugänglich ist.

19. Luft-Ausströmer nach einem der Ansprüche 17 und 18, **dadurch gekennzeichnet, daß** ein Rastmechanismus (56) vorgesehen ist, der das Betätigungselement (52) in einer eingedrückten Stellung halten kann, so daß das Koppelelement bis zu einer erneuten Betätigung in der Komfortstellung verbleibt.

20. Luft-Ausströmer nach einem der vorhergehenden Ansprüche, **dadurch gekennzeichnet, daß** eine Schiebeführung (36, 38) vorgesehen ist, mittels der das Koppelelement (24) verschiebbar am Rahmen gelagert ist.

21. Luft-Ausströmer nach einem der vorhergehenden Ansprüche, **dadurch gekennzeichnet, daß** das zweite Koppelelement (44) in einer Richtung verschiebbar ist, die senkrecht ist zur Verschieberichtung des ersten Koppelelements (24).

## Claims

1. An air vent, especially for vehicle air-conditioning, comprising a frame (10), a plurality of vanes (12, 14, 16, 18, 20) that are arranged so as to swivel about a first axis (42), at least one coupling element (24) with which each of the vanes is coupled, the coupling element being adjustable relative to the first axis between a neutral position in which the vanes are parallel to each other, and a comfort position in which at least some of the vanes are swiveled in directions opposite each other, **characterized by** a second coupling element (44) which is mounted for sliding movement on the frame (10) and on which the vanes are mounted for swiveling movement about the first axis (42).

2. The air vent according to Claim 1, **characterized in that** the first coupling element (24) is pivotally coupled with the vanes by means of a slotted link guide (22, 26, 28, 30, 32, 34).

3. The air vent according to Claim 2, **characterized in that** the slotted link guide consists of a slotted link (26, 28, 30, 32, 34) in the coupling element and a pin (22) provided on the corresponding vane and engaging the slotted link.

4. The air vent according to Claim 3, **characterized in that** a neutral vane (16) is provided, the slotted link (30) associated with the neutral vane extending in a straight line, and **in that** an intermediate vane (14, 18) and an outer vane (12, 20) are provided on either side of the neutral vane, the slotted link (26, 34) associated with the outer vane being more strongly inclined relative to the neutral vane than the slotted link (28, 32) associated with the intermediate vane.

5. The air vent according to Claim 1, **characterized in that** the coupling element (24) is connected to some of the vanes by a coupling rod (60) each.

6. The air vent according to Claim 5, **characterized in that** at least one neutral vane (16) is provided that is connected to the coupling element by a straight-line slotted link guide (22, 30), and **in that** an intermediate vane (14, 18) and an outer vane (12, 20) are provided on either side of the neutral vane, the intermediate and outer vanes being connected to the coupling element by at least one coupling rod (60).

7. The air vent according to Claim 6, **characterized in that** the outer vanes and the intermediate vanes are each connected to the coupling element (24) by one coupling rod (60) each, and **in that** the two coupling rods (60) of an outer vane (12; 20) and of the adjacent intermediate vane (14; 18) are mounted on a common pin (62) on the coupling element.

8. The air vent according to Claim 7, **characterized in that** the pin (62) on which the coupling rods are mounted, as seen from the neutral vane, lies further outside than the respective outer vane (12; 20), and **in that** the coupling rod associated with the outer vane (12; 20) together with the direction defined by the straight-line slotted link guide (22, 30) encloses a smaller angle than with the coupling rod associated with the adjacent intermediate vane (14; 18).

9. The air vent according to Claim 6, **characterized in that** the outer vanes (12; 20) and the adjacent intermediate vanes (14; 18) are connected to each other by a connection member (70) each, and **in that** the coupling rod (60) engages the connection member (70).

10. The air vent according to either of Claims 6 and 9, **characterized in that** two neutral vanes (16) are provided which are connected to each other by a connection member (70), and **in that** the connection member (70) is connected to the coupling element (24) by means of the slotted link guide (22, 30).

11. The air vent according to any of the preceding claims, **characterized in that** the vanes (12, 14, 16, 18, 20) are arranged so as to spread out fan-like in the comfort position so that a diverging air flow is generated.

12. The air vent according to any of Claims 1 to 10, **characterized in that** the vanes (12, 14, 16, 18, 20) are arranged in a converging fashion in the comfort position so that a converging air flow is generated.

13. The air vent according to any of the preceding claims, **characterized in that** the coupling element (24) can be adjusted in translational direction.

14. The air vent according to any of the preceding claims, **characterized in that** at least one return spring (40) is provided that biases the coupling element into the neutral position.

15. The air vent according to Claim 14, **characterized in that** the return spring (40) acts between the coupling element and the frame.

16. The air vent according to Claim 14, **characterized in that** the return spring acts between the coupling element and one of the vanes.

17. The air vent according to any of the preceding claims, **characterized in that** on the frame an actuation element (52) is provided that interacts with the coupling element (24).

18. The air vent according to Claim 17, **characterized in that** the actuation element (52) is provided with a push-button (54) that is accessible from the outside of the air vent.

19. The air vent according to either of Claims 17 and 18, **characterized in that** a latching mechanism (56) is provided that can hold the actuation element (52) in a pushed-in position, so that the coupling element remains in the comfort position until the next actuation.

20. The air vent according to any of the preceding claims, **characterized in that** a sliding guide (36, 38) is provided by means of which the coupling element (24) is mounted such that it can slide on the frame.

21. The air vent according to any of the preceding claims, **characterized in that** the second coupling element (44) can be slid in a direction that is perpendicular to the sliding direction of the first coupling element (24).

## Revendications

1. Diffuseur d'air, en particulier pour la climatisation de véhicules, comportant un cadre (10), plusieurs lamelles (12, 14, 16, 18, 20) qui sont agencées à pivotement autour d'un premier axe (42), et au moins un élément d'accouplement (24) avec lequel est couplée chacune des lamelles, l'élément d'accouplement étant réglable par rapport au premier axe entre une position neutre, dans laquelle les lamelles sont parallèles les unes aux autres, et une position de confort, dans laquelle au moins une partie des lamelles sont pivotées dans des directions opposées les unes par rapport aux autres, **caractérisé par** un deuxième élément d'accouplement (44) qui est monté déplaçable sur le cadre (10) et sur lequel les lamelles sont montées pivotantes autour du premier axe (42).

2. Diffuseur d'air selon la revendication 1, **caractérisé en ce que** le premier élément d'accouplement (24) est couplé à pivotement avec les lamelles au moyen d'un guide de coulisse (22, 26, 28, 30, 32, 34).

3. Diffuseur d'air selon la revendication 2, **caractérisé en ce que** le guide de coulisse est constitué par une coulisse (26, 28, 30, 32, 34) dans l'élément d'accouplement et par un tenon (22) s'engageant dans la coulisse sur la lamelle correspondante.

4. Diffuseur d'air selon la revendication 3, **caractérisé en ce qu'**il est prévu une lamelle neutre (16), la coulisse (30) associée à la lamelle neutre s'étendant de manière rectiligne, et **en ce que** de part et d'autre de la lamelle neutre, il est prévu respectivement une lamelle intermédiaire (14, 18) et une lamelle extérieure (12, 20), la coulisse (26, 34) associée à la lamelle extérieure étant plus fortement inclinée par rapport à la lamelle neutre que la coulisse (28, 32) associée à la lamelle intermédiaire.

5. Diffuseur d'air selon la revendication 1, **caractérisé en ce que** l'élément d'accouplement (24) est relié à une partie des lamelles par une tige d'accouplement (60) respective.

6. Diffuseur d'air selon la revendication 5, **caractérisé en ce qu'**il est prévu au moins une lamelle neutre (16) qui est reliée à l'élément d'accouplement par un guide de coulisse (22, 30) rectiligne, et **en ce que** de part et d'autre de la lamelle neutre, il est prévu respectivement une lamelle intermédiaire (14, 18) et une lamelle extérieure (12, 20) qui sont reliées à l'élément d'accouplement par au moins une tige d'accouplement (60).

7. Diffuseur d'air selon la revendication 6, **caractérisé en ce que** chaque lamelle extérieure et chaque lamelle intermédiaire sont reliées par une tige d'accouplement (60) respective à l'élément d'accouplement (24) et **en ce que** les deux tiges d'accouplement (60) d'une lamelle extérieure (12 ; 20) et de la lamelle intermédiaire (14 ; 18) située à côté sont montées sur un tenon commun (62) sur l'élément d'accouplement.

8. Diffuseur d'air selon la revendication 7, **caractérisé en ce que** le tenon (62), sur lequel sont montées les tiges d'accouplement, est situé plus à l'extérieur, vu depuis la lamelle neutre, que la lamelle extérieure (12 ; 20) respective, et **en ce que** la tige d'accouplement associée à la lamelle extérieure (12 ; 20) forme avec la direction définie par le guide de coulisse (22, 30) rectiligne un angle plus petit qu'avec la tige d'accouplement associée à la lamelle intermédiaire (14 ; 18) située à côté.

9. Diffuseur d'air selon la revendication 6, **caractérisé en ce qu'**une lamelle extérieure (12 ; 20) et la lamelle intermédiaire (14 ; 18) située à côté, sont respectivement reliées l'une à l'autre par un élément de liaison (70) et **en ce que** la tige d'accouplement (60) attaque l'élément de liaison (70).

10. Diffuseur d'air selon l'une des revendications 6 et 9, **caractérisé en ce qu'**il est prévu deux lamelles neutres (16) qui sont reliées l'une à l'autre par un élément de liaison (70), et **en ce que** l'élément de liaison (70) est relié à l'élément d'accouplement (24) au moyen du guide de coulisse (22, 30).

11. Diffuseur d'air selon l'une des revendications précédentes, **caractérisé en ce que** les lamelles (12, 14, 16, 18, 20) sont dépliées en éventail dans la position de confort de sorte qu'il en résulte un courant d'air divergent.

12. Diffuseur d'air selon l'une des revendications 1 et 10, **caractérisé en ce que** les lamelles (12, 14, 16, 18, 20) sont repliées en éventail dans la position de confort de sorte qu'il en résulte un courant d'air convergent.

13. Diffuseur d'air selon l'une des revendications précédentes, **caractérisé en ce que** l'élément d'accouplement (24) est réglable en translation.

14. Diffuseur d'air selon l'une des revendications précédentes, **caractérisé en ce qu'**il est prévu au moins un ressort de rappel (40) qui sollicite l'élément d'accouplement dans la position neutre.

15. Diffuseur d'air selon la revendication 14, **caractérisé en ce que** le ressort de rappel (40) agit entre l'élément d'accouplement et le cadre.

16. Diffuseur d'air selon la revendication 14, **caractérisé en ce que** le ressort de rappel (40) agit entre l'élément d'accouplement et une des lamelles.

17. Diffuseur d'air selon l'une des revendications précédentes, **caractérisé en ce qu'**il est prévu sur le cadre un élément d'actionnement (52) qui coopère avec l'élément d'accouplement (24).

18. Diffuseur d'air selon la revendication 17, **caractérisé en ce que** l'élément d'actionnement (52) est pourvu d'une touche (54) qui est accessible depuis la face extérieure du diffuseur d'air.

19. Diffuseur d'air selon l'une des revendications 17 et 18, **caractérisé en ce qu'**il est prévu un mécanisme d'enclenchement (56) qui peut maintenir l'élément d'actionnement (52) dans une position enfoncée de sorte que l'élément d'accouplement reste dans la position de confort jusqu'à un nouvel actionnement.

20. Diffuseur d'air selon l'une des revendications précédentes, **caractérisé en ce qu'**il est prévu un guidage à glissière (36, 38) au moyen duquel l'élément d'accouplement (24) est monté déplaçable sur le cadre.

21. Diffuseur d'air selon l'une des revendications précédentes, **caractérisé en ce que** le deuxième élément d'accouplement (44) est déplaçable dans une direction qui est perpendiculaire à la direction de déplacement du premier élément d'accouplement (24).
